(19) Europäisches Patentamt
European Patent Office
Office européen des brevets

(11) **EP 4 593 181 A1**

(12) **EUROPEAN PATENT APPLICATION**
published in accordance with Art. 153(4) EPC

(43) Date of publication:
**30.07.2025 Bulletin 2025/31**

(21) Application number: **22960336.0**

(22) Date of filing: **30.09.2022**

(51) International Patent Classification (IPC):
**H01M 50/333** (2021.01)   **H01M 10/613** (2014.01)

(52) Cooperative Patent Classification (CPC):
**H01M 10/613; H01M 50/333;** Y02E 60/10

(86) International application number:
**PCT/CN2022/123365**

(87) International publication number:
**WO 2024/065717 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **CONTEMPORARY AMPEREX TECHNOLOGY (HONG KONG) LIMITED Central (HK)**

(72) Inventors:
• **LI, Xing Ningde, Fujian 352100 (CN)**
• **ZHANG, Chenchen Ningde, Fujian 352100 (CN)**
• **TANG, Yu Ningde, Fujian 352100 (CN)**
• **LI, Zhenhua Ningde, Fujian 352100 (CN)**

(74) Representative: **Ziebig Hengelhaupt Intellectual Property Attorneys Patentanwaltskanzlei PartGmbB Leipziger Straße 49 10117 Berlin (DE)**

(54) **BATTERY AND ELECTRIC APPARATUS**

(57)    The present disclosure provides a battery and an electrical device, which relates to the technology field of batteries. The battery comprises a battery cell and a functional component. A side of the battery cell along a first direction is provided with a pressure relief mechanism. The functional component is located on one side of the battery cell where the pressure relief mechanism is provided, and the functional component comprises a thermal management component and a protective component. The thermal management component is attached to the battery cell, and the thermal management component is configured to regulate a temperature of the battery cell. A protective component is connected to the thermal management component and covers at least a portion of the pressure relief mechanism. The protective component is connected to the thermal management component to form an integrated functional component. Therefore, during the assembly process of the battery, the thermal management component and the protective component can be first assembled into a single structure and then mounted on the same side of the battery cell, thus simplifying the mounting process and reducing the difficulty of the battery assembly. In addition, the protective component and the thermal management component are provided on the same side of the battery cell, which is conducive to rationally utilizing the internal space of the box of the battery.

FIG. 5

# Description

## Technical Field

The present disclosure relates to the technical field of batteries, in particular to a battery and an electrical device.

## Background Art

Vehicles use secondary batteries such as lithium-ion batteries, sodium-ion batteries, solid-state batteries, etc., which possess prominent advantages such as high energy density, and good cycling performance, and are widely applied in portable electronic devices, electric vehicles, power tools, drones, energy storage systems, and other fields. Simplifying the manufacturing process of batteries is beneficial for improving production efficiency, which is of significant importance for advancing battery technology. Therefore, simplifying the assembly process of batteries is a pressing issue in the field of batteries that needs to be addressed.

## Summary

The embodiments of the present disclosure provide a battery and electrical device so as to reduce the difficulty of battery assembly.

In the first aspect, the embodiments of the present disclosure provide a battery comprising a battery cell and a functional component. A side of the battery cell along a first direction is provided with a pressure relief mechanism. The functional component is located on one side of the battery cell where the pressure relief mechanism is provided, and the functional component comprises a thermal management component and a protective component. The thermal management component is attached to the battery cell, and the thermal management component is configured to regulate a temperature of the battery cell. A protective component is connected to the thermal management component and covers at least a portion of the pressure relief mechanism.

In the above technical solution, the protective component is connected to the thermal management component to form an integrated functional component. Therefore, during the assembly process of the battery, the thermal management component and the protective component can be first assembled into a single structure and then mounted on the same side of the battery cell, thus simplifying the mounting process and reducing the difficulty of the battery assembly. In addition, the protective component and the thermal management component are provided on the same side of the battery cell, which is conducive to rationally utilizing the internal space of the box of the battery.

In some embodiments of the first aspect of the present disclosure, along the first direction, a projection of the protective component in a plane perpendicular to the first direction covers an entirety of a projection of the pressure relief mechanism in a plane perpendicular to the first direction.

In the above technical solution, with the protective component covering the entirety of the pressure relief mechanism, emissions from the pressure relief mechanism can be blocked as much as possible by the protective component. This reduces the risk of high-temperature gases emitted from the pressure relief mechanism spreading to other regions and damaging other structures of the battery or causing a fire.

In some embodiments of the first aspect of the present disclosure, the thermal management component is provided with an avoidance hole, wherein the avoidance hole is configured to avoid the pressure relief mechanism; and along the first direction, the protective component is connected to a side of the thermal management part component back away from the battery cell and covers at least a portion of the avoidance hole.

In the above technical solution, the avoidance hole of the thermal management component avoids the pressure relief mechanism, which can help prevent the thermal management component from interfering with the pressure relief mechanism during the pressure relief. The protective component is connected to a side of the thermal management part back away from the battery cell and covers at least a portion of the avoidance hole. This not only blocks emissions from the pressure relief mechanism but also increases the distance between the pressure relief mechanism and the protective component by a thickness of the thermal management component in the first direction, which is advantageous for the smooth opening of the pressure relief mechanism during the pressure relief.

In some embodiments of the first aspect of the present disclosure, a first flow channel is formed inside the protective component, wherein the first flow channel is configured to accommodate a fluid medium.

In the above technical solution, a first flow channel is formed inside the protective component. If the first flow channel accommodates a fluid medium, it can increase the specific heat capacity of the protective component, thereby better serving as thermal insulation and fire prevention.

In some embodiments of the first aspect of the present disclosure, a second flow channel configured to accommodate the fluid medium is formed inside the thermal management component, wherein the first flow channel communicates with the second flow channel.

In the above technical solution, the first flow channel and the second flow channel are communicated, where the fluid medium in the first flow channel and second flow channel can be enabled to flow through each other. This enhances heat transfer capability, thus allowing the thermal management component to better regulate the temperature of the battery cell.

In some embodiments of the first aspect of the present disclosure, the battery further comprises a unidirectional conducting component, wherein the unidirectional conducting component is configured to allow the fluid medium in the second flow channel to flow into the first flow channel and to prevent the fluid medium in the first flow channel from flowing into the second flow channel.

In the above technical solution, the unidirectional conducting component allows the fluid medium to flow only from the second flow channel to the first flow channel. When the protective component is damaged due to the interaction with high-temperature gases emitted by the pressure relief mechanism, the fluid medium can flow from the second flow channel to the first flow channel and then from the damaged region to the pressure relief mechanism, thereby achieving cooling and extinguishing fires. This helps reduce the risk of safety incidents.

In some embodiments of the first aspect of the present disclosure, the first flow channel is provided with a medium outlet, and the second flow channel is provided with a medium inlet.

In the above technical solution, the first flow channel and the second flow channel are provided with a medium outlet and a medium inlet, respectively, thus facilitating the circulation of the fluid medium inside the protective component and the thermal management component. This is advantageous for temperature regulation of the battery cell and helps maintain a larger specific heat capacity of the protective component.

In some embodiments of the first aspect of the present disclosure, along a second direction, the avoidance hole penetrates at least one edge of the thermal management component, with the first direction perpendicular to the second direction.

In the above technical solution, the avoidance hole penetrates at least one edge of the thermal management component in the second direction. Therefore, an emission channel is formed in the second direction, thus allowing emissions to be discharged along the second direction after the pressure relief mechanism is opened. This improves emission efficiency and reduces the risk of secondary accidents caused by emissions from the pressure relief mechanism being collected in the avoidance hole due to obstruction by the protective component.

In some embodiments of the first aspect of the present disclosure, along the first direction, the protective component is provided with a first surface facing the thermal management component and connected to the thermal management component; the first surface is provided with a groove, wherein the groove penetrates at least one edge of the protective component along the second direction; and the groove is communicated with the avoidance hole, with the first direction perpendicular to the second direction.

In the above technical solution, the groove penetrates at least one edge of the protective component along the second direction, and the groove and the avoidance hole are communicated. After the pressure relief mechanism is opened, gases can be quickly discharged along the second direction within the groove. This improves the efficiency of gas discharge and reduces the risk of secondary accidents caused by gases from the pressure relief mechanism accumulating in the avoidance holes.

In some embodiments of the first aspect of the present disclosure, the protective component comprises a main body part and an extending portion connected with each other; the main body part is connected to a side of the thermal management component back away from the battery cell; and the extension portion extends from the main body part to inside of the avoidance hole.

In the above technical solution, the extending portion extends into the avoidance hole, which can form a positional fit with the avoidance hole so as to improve the relative stability between the thermal management component and the protective component. With the first flow channel formed inside the protective component, the cross-sectional area of the first flow channel, corresponding to the location of the extending portion, is larger, allowing for a greater volume of fluid medium to be accommodated. This increases the specific heat capacity at the location of the extending portion, thereby enhancing the protective capability of the protective component.

In some embodiments of the first aspect of the present disclosure, along the first direction, a gap is arranged between the pressure relief mechanism and the protective component.

In the above technical solution, a gap is formed between the pressure relief mechanism and the protective component in the first direction, which facilitates the smooth opening of the pressure relief mechanism to release the pressure inside the battery cell so as to help reduce the risk of safety incidents such as explosions or fires in the battery.

In some embodiments of the first aspect of the present disclosure, along the first direction, a dimension of the gap is h, which satisfies $0.2mm \leq h \leq 5mm$.

In the above technical solution, if the gap in the first direction is too large, it can result in a less compact structure between the functional component and the battery cell, which occupies more space. On the other hand, if the gap in the first direction is too small, it can result in the pressure relief mechanism not being able to open for pressure relief. Therefore, $0.2mm \leq h \leq 5mm$ ensures a more compact overall structure formed by the functional component and the battery cell and also allows the pressure relief mechanism to open smoothly for pressure relief.

In some embodiments of the first aspect of the present disclosure, an area of the pressure relief mechanism is S; and along the first direction, a dimension of the gap is h, satisfying $h \geq 0.2 * \sqrt{3.14 * S}$.

In the above technical solution, the larger the pressure relief area of the pressure relief mechanism, the more space is needed to open and achieve pressure relief. Therefore, satisfying $h \geq 0.2 * \sqrt{3.14 * S}$ is advantageous for the pressure relief mechanism to open to a certain area and achieve pressure relief.

In some embodiments of the first aspect of the present disclosure, $h \geq 0.5 * \sqrt{3.14 * S}$.

In the above technical solution, $h \geq 0.5 * \sqrt{3.14 * S}$ is advantageous for the pressure relief mechanism to open to a larger area, thereby achieving rapid pressure relief.

In some embodiments of the first aspect of the present disclosure, the battery further comprises an adhesive layer, wherein the thermal management component is connected to the battery cell through the adhesive layer.

In the above technical solution, connecting the thermal management component to the battery cell via the adhesive layer ensures good stability of the connection, thereby maintaining a stable relative positional relationship between the functional component and the battery cell. Additionally, this connection method is simple, thereby reducing the assembly difficulty of the battery cell.

In some embodiments of the first aspect of the present disclosure, a melting point of a material of the protective component is A, satisfying $A \leq 1600°C$.

In the above technical solution, if the melting point of the material of the protective component is too high, and in the case where a first flow channel is formed inside the protective component with fluid medium accommodated in the first flow channel, the protective component is less likely to melt. Consequently, during the pressure relief process of the pressure relief mechanism, the fluid medium inside the protective component sprays out towards the pressure relief mechanism, thus aiding in cooling and extinguishing fires. $A \leq 1600°C$ can block high-temperature gases and other emissions from the pressure relief mechanism; moreover, it can be melted in a timely manner if the temperature of the hot gases and other emissions discharged from the pressure relief mechanism is too high, thus allowing the internal fluid medium to spray out for cooling and fire extinguishing. This helps reduce the risk of serious safety incidents such as explosions and fires.

In some embodiments of the first aspect of the present disclosure, $A \leq 800°C$.

In the above technical solution, if $A > 800°C$, the temperature inside the battery needs to be greater than 800°C for the protective component to melt. This can result in damage to other components of the battery with lower temperature resistance. Therefore, $A \leq 800°C$ can block high-temperature gases and other emissions from the pressure relief mechanism. In addition, it can be melted in a timely manner if the temperature of the emissions discharged from the pressure relief mechanism is too high, thus allowing the internal fluid medium to spray out for cooling and fire extinguishing. This helps reduce the risk of serious safety incidents such as explosions and fires and also decreases the risk of other components within the battery being damaged by high temperatures.

In some embodiments of the first aspect of the present disclosure, a volume of the protective component is $V_1$ with a unit of $dm^3$; and a capacity of the battery is C with a unit of Ah, satisfying $1 \leq V_1/C$.

In the above technical solution, the larger the capacity of the battery, the greater the amount and temperature of emissions discharged when the internal pressure of the battery cell of the battery reaches the point where the pressure relief mechanism opens to relieve the pressure. This requires a higher blocking capability for the protective component to block the emissions effectively. Therefore, $1 \leq V_1/C$ ensures that the blocking capability of the protective component to block emissions matches the capacity of the battery, thereby enabling the protective component to better serve as insulation and fire prevention, i.e., better firefighting.

In some embodiments of the first aspect of the present disclosure, $V_1/C \leq 10$.

In the above technical solution, if $V_1/C$ is too large, the blocking capability of the protective component to block emissions far exceeds the corresponding blocking capability required for the capacity of the battery. This not only leads to performance waste but also results in the protective component being oversized, which occupies more space. Therefore, $V_1/C \leq 10$ ensures that the blocking capability of the protective component is slightly higher than the corresponding blocking capability required for the capacity of the battery, thereby reducing performance waste, preventing the protective component from being oversized, and reducing the space occupied by the protective component.

In some embodiments of the first aspect of the present disclosure, a volume of the thermal management component is $V_2$, satisfying $V_1/V_2 \leq 0.5$.

In the above technical solutions, the temperature regulation capability of the thermal management component is generally matched with the capacity of the battery. The larger the capacity of the battery, the higher the temperature regulation capability of the thermal management component is required. In the case of $1 \leq V_1/C$, if the size of the thermal management component is too large, its temperature regulation capability exceeds the temperature regulation capability that the battery should theoretically need, resulting in wasted performance. In addition, the size of the thermal management component is too large and will take up more space. Therefore, $V_1/V_2 \leq 0.5$ ensures that the temperature regulation capability of the thermal management component matches the capacity of the battery, thus reducing performance waste, preventing the thermal management component from being oversized, and reducing the space occupied by the thermal management component.

In some embodiments of the first aspect of the

present disclosure, $V_1/V_2 \leq 0.2$.

In the above technical solution, if $V_1/V_2$ is greater than 0.2, there is still considerable performance waste in the thermal management component for a certain capacity of the battery. Therefore, $V_1/V_2 \leq 0.2$ can help reduce performance waste, prevent the thermal management component from being oversized, and reduce the space occupied by the thermal management component.

In some embodiments of the first aspect of the present disclosure, the battery comprises multiple battery cells; each battery cell is provided with at least one pressure relief mechanism; the thermal management component is provided with multiple avoidance holes; the avoidance holes correspond one-to-one with the pressure relief mechanisms of the battery cells.

In the above technical solution, arranging the avoidance holes to correspond one-to-one with the pressure relief mechanisms of the battery cells facilitates the release of the pressure inside the battery cell from each pressure relief mechanism, thereby enhancing the safety performance of the battery.

In some embodiments of the first aspect of the present disclosure, the battery comprises multiple protective components; and each protective component covers one avoidance hole.

In the above technical solution, each protective component covers its corresponding avoidance hole, thus facilitating the replacement of the protective component. During the replacement process, only the damaged part of the protective component needs to be replaced, which avoids the need to replace the entire protective component. This reduces waste and saves costs.

In some embodiments of the first aspect of the present disclosure, each protective component covers multiple avoidance holes.

In the above technical solution, having one protective component cover multiple avoidance holes reduces the number of the protective components of the battery. This also decreases the number of components that need to be assembled, thereby reducing assembly complexity and improving assembly efficiency.

In some embodiments of the first aspect of the present disclosure, the battery cell is further provided with an electrode terminal configured for outputting the electrical energy of the battery cell, and the functional component is arranged on a side of the battery cell back away from the electrode terminal.

In the above technical solution, arranging the functional component on the side of the battery cell back away from the electrode terminal facilitates the connection of the electrode terminal with other structures inside the battery to output electrical energy from the battery cell. It also reduces the risk of interference between the functional components and other structures inside the battery.

In some embodiments of the first aspect of the present disclosure, the battery cell is further provided with an electrode terminal configured for outputting electrical energy of the battery cell; the functional component and the electrode terminal are arranged on the same side of the battery cell; and the thermal management component is arranged to avoid the electrode terminal.

In the above technical solution, the functional component and electrode terminal are located on the same side of the battery cell, and the thermal management component is arranged to avoid the electrode terminal. Therefore, the functional component can utilize the space of the electrode terminal protruding from the end cap to improve the space utilization inside the battery, which is beneficial for enhancing the energy density of the battery.

In the second aspect, the embodiments of the present disclosure provide an electrical device, comprising the battery provided in any of the embodiments of the first aspect.

## Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.

FIG. 1 is a schematic diagram of a battery in the prior art;

FIG. 2 is a schematic diagram of a structure of a vehicle provided in some embodiments of the present disclosure;

FIG. 3 is a structural schematic diagram of a battery provided in some embodiments of the present disclosure;

FIG. 4 is a schematic diagram of a structure of a battery cell provided in some embodiments of the present disclosure;

FIG. 5 is a schematic diagram of a structure of a battery provided in some other embodiments of the present disclosure;

FIG. 6 is a schematic diagram of a structure of a battery provided in some other embodiments of the present disclosure;

FIG. 7 is a schematic diagram of a structure of a battery provided in some other embodiments of the present disclosure;

FIG. 8 is a schematic diagram of a structure of a thermal management component provided in some embodiments of the present disclosure;

FIG. 9 is a sectional view of the thermal management component provided in some other embodiments of the present disclosure;

FIG. 10 is a schematic diagram of a structure of a protective component provided in some embodiments of the present disclosure;

FIG. 11 is a sectional view of the protective component provided in some other embodiments of the present disclosure;

FIG. 12 is an exploded view of the battery provided in some other embodiments of the present disclosure;

FIG. 13 is an exploded view of a portion of the structure of the battery of FIG. 12;

FIG. 14 is a schematic diagram of a partial structure of a battery provided in some embodiments of the present disclosure;

FIG. 15 is a structural schematic diagram of a support structure provided in some embodiments of the present disclosure; and

FIG. 16 is a structural schematic diagram of a battery provided in some embodiments of the present disclosure.

Reference numerals: 1000- vehicle; 100', 100- battery; 10- box; 11-first portion; 12- second portion; 20', 20- battery cell; 21- end cap; 22- shell; 221- opening; 23- electrode assembly; 231- tab; 24', 24- electrode terminal; 25', 25- pressure relief mechanism; 30- functional component; 31', 31- thermal management component; 311- avoidance hole; 311a- first discharge channel; 312- second flow channel; 3121- medium inlet; 313- through-hole; 32', 32-protective component; 321- first flow channel; 3211- medium outlet; 3212-channel portion; 3213- accommodation portion; 322- first surface; 323- groove; 323a- second discharge channel; 324- main body part; 325- extending portion; 40- unidirectional conducting component; 50- gap; 60- adhesive layer; 70-support structure; 71- connecting part; 72- first hollow portion; 73- second hollow portion; 74- first limiting portion; 75- first space; 76- second limiting portion; 77- second space; 200- controller; 300- motor; X- first direction; Y- second direction.

## Detailed Description of Embodiments

In order to make the objective, technical solutions, and advantages of the embodiments of the present disclosure clearer, the following description will provide a clear and comprehensive explanation of the technical solutions in the embodiments of the present disclosure with reference to the drawings. Clearly, the described embodiments are part of the embodiments of the present disclosure and not the entire embodiments. The components of embodiments of the present disclosure which are generally described and illustrated in the drawings herein can be arranged and designed in a variety of different configurations.

Accordingly, the following detailed description of the embodiments of the present disclosure provided in the drawings is not intended to limit the scope of the claimed disclosure but merely represents selected embodiments of the present disclosure. Based on the embodiments in the present disclosure, all other embodiments obtained by those of ordinary skill in the art without making inventive efforts are within the scope of protection of the present disclosure.

It should be noted that, without conflicting, the embodiments and features described in the present disclosure can be combined with each other.

It should be noted that similar numerals and letters denote similar terms in the following drawings so that once an item is defined in one drawing, it does not need to be further discussed in subsequent drawings.

In the description of the embodiments of the present disclosure, it should be noted that the indication of orientation or positional relationship is based on the orientation or positional relationship shown in the drawings, or it may be the customary orientation or positional relationship when the product of the present disclosure is used, or it may be the orientation or positional relationship commonly understood by those skilled in the art. These indications are solely for facilitating the description of the present disclosure and simplifying the description. They do not imply or suggest that the device or component referred to must have a specific orientation, be constructed in a specific orientation, or be operated in a specific orientation. Therefore, they should not be interpreted as limitations on the present disclosure. In addition, the terms "first", "second", and "third" are only used to distinguish the descriptive and are not to be construed as indicating or implying relative importance.

Currently, looking at the development of market trends, the application of power batteries is becoming increasingly widespread. Power batteries are not only applied in energy storage systems such as hydro power, thermal power, wind power, and solar power stations but are also extensively used in electric transportation such as electric bicycles, electric motorcycles, and electric cars; military equipment, aerospace, and many other fields. As the application areas of power batteries continue to expand, the demand for batteries in the market is also constantly increasing.

In the present disclosure, the battery cell can comprise various types of batteries such as lithium-ion secondary batteries, lithium-ion primary batteries, lithium-sulfur batteries, sodium-lithium ion batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, cuboid-shaped battery cells, and pouch battery cells. The embodiments of the embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. Batteries typically comprise a box that is configured to encapsulate one or multiple battery cells.

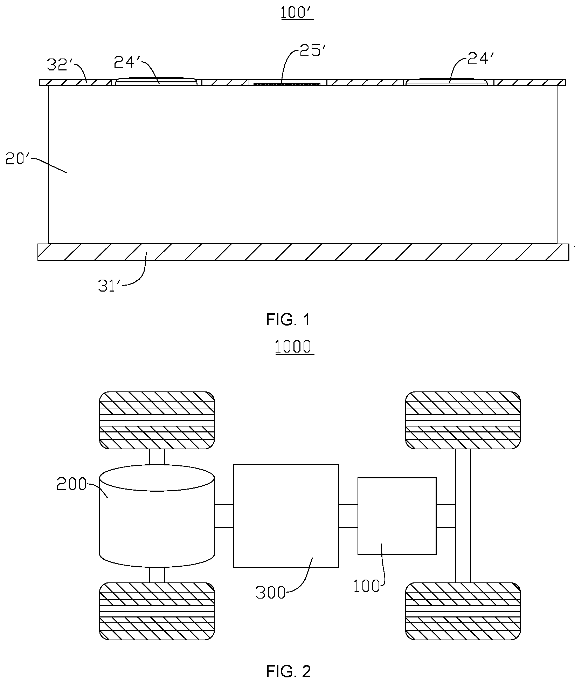

As shown in FIG. 1, the battery 100' includes a battery cell 20', a thermal management component 31', and a protective component 32'. The thermal management component 31' is configured to regulate the temperature of the battery cell 20'; the protective component 32' is provided over the pressure relief mechanism 25'; the high-temperature gases and other emissions that are released after the pressure relief mechanism 25' is opened can be blocked by the protective component 32' to serve as heat insulation and fire protection.

The inventors found that the thermal management component 31' and the protective component 32' are respectively arranged on opposite sides of the battery cell 20'. Typically, the electrode terminal 24' and the pressure relief mechanism 25' of the battery cell 20' are arranged on the same side of the battery cell 20'. The thermal management component 31 is arranged on the side of the battery cell 20' back away from the electrode terminal 24' to regulate the temperature of the battery cell 20'. The protective component 32' is arranged on the side of the electrode terminal 24' and covers the pressure relief mechanism 25'. Therefore, mounting the thermal management component 31' and the protective component 32' on opposite sides of the battery cell 20' not only complicates the mounting process and increases assembly difficulty but also occupies space on both opposite sides of the battery cell 20', thus leading to unreasonable use of space.

Based on the aforementioned considerations, in order to alleviate the issues of high assembly difficulty and inefficient space utilization in the battery 100, the inventors conducted in-depth research and designed a battery 100, wherein the battery 100 comprises a battery cell 20 and a functional component 30. A side of the battery cell 20 along a first direction X is provided with a pressure relief mechanism 25. The functional component 30 is located on one side of the battery cell 20 where the pressure relief mechanism 25 is provided, and the functional component 30 comprises a thermal management component 31 and a protective component 32. The thermal management component 31 is attached to the battery cell 20, and the thermal management component 31 is configured to regulate a temperature of the battery cell 20. A protective component 32 is connected to the thermal management component 31 and covers at least a portion of the pressure relief mechanism 25.

The protective component 32 is connected to the thermal management component 31 to form an integrated functional component 30. Therefore, during the assembly process of the battery 100, the thermal management component 31 and the protective component 32 can be first assembled into a single structure and then mounted on the same side of the battery cell 20, thus simplifying the mounting process and reducing the difficulty of battery 100 assembly.

In addition, the protective component 32 and the thermal management component 31 are provided on the same side of the battery cell 20, which is conducive to rationally utilizing the internal space of the box 10 of the battery 100.

The battery 100 disclosed in the embodiments of the present disclosure can be used in various electrical devices, comprising but not limited to vehicles 1000, ships, or aircraft. The power system of the electrical device can be formed using the battery 100 disclosed in the present disclosure. This contributes to reducing the difficulty of assembling the battery 100 of the electrical device.

The embodiments of the present disclosure provide an electrical device that uses batteries as a power source. The electrical device can comprise but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electrical device is a vehicle 1000 as an example.

Referring to FIG. 2, the vehicle 1000 can be a gasoline-powered car, a natural gas car, or a new energy vehicle. The new energy vehicles can be pure electric cars, hybrid cars, or extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

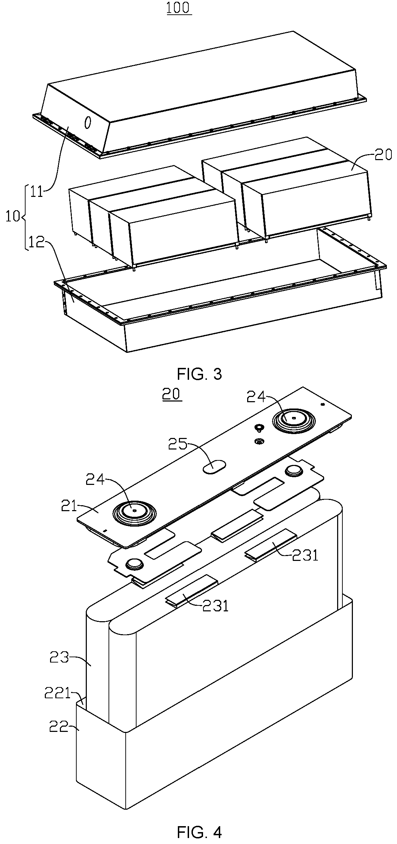

Referring to FIG. 3, the battery 100 comprises a box 10 and a battery cell 20, wherein the box 20 is housed the battery cell 10. The box 10 is configured to provide a containment space for the battery cell 20, and the box 10 can be of various structures. In some embodiments, the box 10 can comprise a first portion 11 and a second portion 12, wherein the first portion 11 and the second portion 12 are fitted together. The first portion 11 and the second portion 12 together define the containment space used to accommodate the battery cell 20. The second portion 12 can be a hollow structure open 221 at one end to form a containment cavity for accommodating the battery cell 20, and the first portion 11 can be a plate-like structure. The first portion 11 is capped over an opening 221 side of the second portion 12 so that the first portion 11 and the second portion 12 together define a containment space. Additionally, both the first portion 11 and the second portion 12 can be hollow structures open 221 at one end to form a containment cavity for accommodating the battery cell 20, and an opening 221 side of the first portion 11 is capped over an opening 221 side of the second portion 12. Of course, the box 10 formed by the first portion 11 and the second portion 12 can be of a variety of shapes, e.g., cylindrical, rectangular, etc.

In the battery 100, multiple battery cells 20 can be provided. The multiple battery cells 20 can be connected in series, parallel, or hybrid. Hybrid connection refers to having both series and parallel connections among multiple battery cells 20. The multiple battery cells 20 can be directly connected in series, parallel, or a combination thereof, and then the whole comprising the multiple battery cells 20 is housed in the box 10. Of course, the battery 100 can also be in the form that, the multiple battery cells 20 can be first connected in series, parallel, or hybrid to form battery modules, and then the multiple battery modules can be connected in series, parallel, or hybrid to be formed into a whole, which is accommodated within the box 10. The battery 100 can also comprise other structures. For example, the battery 100 can also comprise a busbar component, configured for achieving an electrical connection between the multiple battery cells 20.

In some embodiments, the battery 100 can also comprise a busbar component (not shown in the figure). The multiple battery cells 20 can be electrically connected through the busbar component to achieve series, parallel, or hybrid connection of the battery cells 20.

Each battery cell 20 can be a secondary battery 100 or a primary battery 100. It can also be a lithium-sulfur battery 100, sodium-ion battery 100, magnesium-ion battery 100, or other types, but is not limited to these. The battery cell 20 can have various shapes such as flat, rectangular, or other shapes.

The battery cell 20 refers to the smallest unit comprising the battery 100. As shown in FIG. 4, the battery cell 20 includes an end cap 21, a shell 22, an electrode assembly 23, and other functional components.

The end cap 21 refers to the component that covers the opening 221 of the shell 22 to isolate the internal environment of the battery cell 20 from the external environment. Without limitation, the shape of the end cap 21 can be adapted to fit the shape of the shell 22 to cooperate with the shell 22. Optionally, the end cap 21 can be made of a material with a certain hardness and strength, such as aluminum alloy. In this way, the end cap 21 is less likely to deform under compression or impact, allowing the battery cell 20 to have higher structural strength and safety performance can be improved. Functional components such as electrode terminals 24 can be arranged on the end cap 21. The electrode terminal 24 can be configured to electrically connect to the electrode assembly 23 for outputting or inputting electrical energy of the battery cell 20. In some embodiments, the end cap 21 can also be provided with a pressure relief mechanism 25 for relieving the internal pressure when the pressure or temperature inside the battery cell 20 reaches a threshold value. The material of the end cap 21 can vary, such as copper, iron, aluminum, stainless steel, aluminum alloy, plastic, etc. The embodiments of the present disclosure do not impose specific restrictions on this. In some embodiments, an insulating component can be arranged on the inner side of the end cap 21. The insulating component can be configured to isolate the electrical connection components inside the shell 22 from the end cap 21, thus reducing the risk of short circuits. Exemplarily, the material of the insulating component can be plastics, rubber, and other similar materials.

The shell 22 is a component configured to cooperate with the end cap 21 to form the internal environment of the battery cell 20. The formed internal environment can accommodate electrode assembly 23, electrolyte, and other components. The shell 22 and the end cap 21 can be independent components, and an opening 221 can be provided on the shell 22. The end cap 21 can be closed over the opening 221 to form the internal environment of the battery cell 20 at the opening 221. Without limitation, the end cap 21 and the shell 22 can also be integrated. Specifically, the end cap 21 and the shell 22 can first form a common connecting surface before other components are encapsulated. When it is necessary to seal the interior of the shell 22, the end cap 21 can be closed over the shell 22. The shell 22 can have various shapes and sizes, such as cuboid, cylindrical, hexagonal, etc. Specifically, the shape of the shell 22 can be determined based on the specific shape and size of the electrode assembly 23. The material of the shell 22 can vary, such as copper, iron, aluminum, stainless steel, aluminum alloy, plastic, etc. The embodiments of the present disclosure do not impose specific restrictions on this.

The electrode assembly 23 is the component within the battery cell 20 where electrochemical reactions occur. The shell 22 can contain one or more electrode assemblies 23. The electrode assembly 23 is primarily formed by winding or stacking the positive electrode sheet and negative electrode sheet, and typically, a separator is arranged between the positive electrode sheet and negative electrode sheet. The portions of the positive electrode sheet and negative electrode sheet that contain the active material constitute the main body part of the electrode assembly 23, and the portions of the positive electrode sheet and negative electrode sheet that do not contain the active material each constitute the tab 231. The positive terminal tab 231 and the negative terminal tab 231 can be located at one end of the main body part or separately at the two ends of the main body part. During the charging and discharging process of the battery 100, the positive electrode active material and the negative electrode active material undergo reactions with the electrolyte. The tab 231 is connected to the electrode terminal 24 to form an electrical circuit for the flow of current.

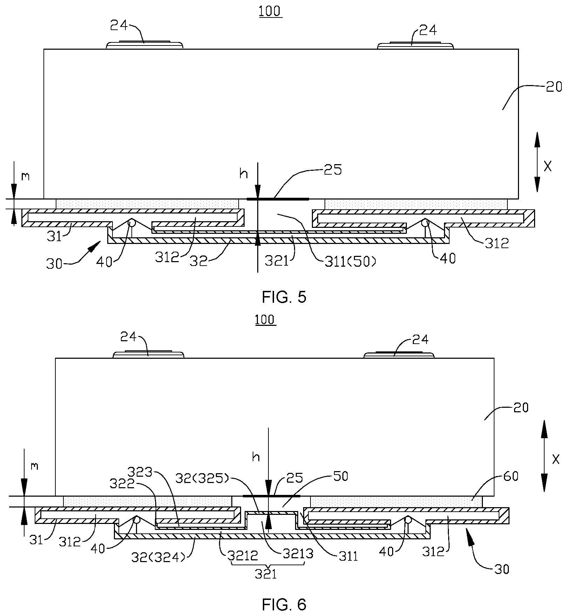

As shown in FIGS. 5, 6, and 7, in some embodiments, the battery 100 includes a battery cell 20 and a functional component 30. A side of the battery cell 20 along a first direction X is provided with a pressure relief mechanism 25. The functional component 30 is located on one side of the battery cell 20 where the pressure relief mechanism 25 is provided, and the functional component 30 comprises a thermal management component 31 and a protective component 32. The thermal management component 31 is attached to the battery cell 20, and the thermal management component 31 is configured to regulate a temperature of the battery cell 20. A protective component 32 is connected to the thermal management component 31 and covers at least a portion of the pressure relief mechanism 25.

The pressure relief mechanism 25 can refer to a component or device within the battery cell 20 that is actuated when the internal pressure or temperature of the battery cell reaches a preset threshold, releasing internal pressure or temperature. The threshold design varies depending on the design requirements. The threshold can depend on the material of one or more components in the battery cell 20, such as the positive electrode sheet, the negative electrode sheet, the electrolyte, and the separator. The pressure relief mechanism 25 can take the form of devices such as explosion-proof valves, gas valves, explosion-proof disks pressure relief valves, or safety valves, and it can specifically use pressure-sensitive or temperature-sensitive elements or structures. In other words, when the internal pressure or temperature of the battery cell 20 reaches a predetermined threshold, the pressure relief mechanism 25 activates, or a weakened structure within the pressure relief mechanism 25 is damaged, thus creating an opening 221 or channel for the release of internal pressure or temperature.

The pressure relief mechanism 25 can be provided in the end cap 21 of the battery cell 20 or in the shell 22 of the battery cell 20. The pressure relief mechanism 25 and the electrode terminal 24 can be located on the same side of the battery cell 20. The pressure relief mechanism 25 and the electrode terminal 24 can be arranged on different sides of the battery cell 20, for example, the pressure relief mechanism 25 and the electrode terminal 24 are arranged on opposite sides of the battery cell 20 along the first direction X.

The thermal management component 31 can increase the temperature of the battery cell 20. For example, in situations where the ambient temperature is too low, causing the battery cell 20 to be unable to charge or discharge properly, the thermal management component 31 increases the temperature of the battery cell 20 to enable the battery cell 20 to charge and discharge normally. The thermal management component 31 can be configured to lower the temperature of the battery cell 20. For example, during the charging or discharging process of the battery cell 20, if the temperature of the battery cell 20 rises or if the ambient temperature surrounding the battery cell 20 is too high, the thermal management component 31 cools down the battery cell 20 to maintain the battery cell 20 at a normal operating temperature, thereby reducing the likelihood of safety incidents.

The protective component 32 has good heat resistance. The protective component 32 is configured to block the emissions discharged from the battery cell 20 through the pressure relief mechanism 25. Emissions from the battery cell include high-temperature gases, electrolytes, dissolved or fragmented positive and negative electrode sheets, fragments of the separator, high-temperature and high-pressure gases generated by reactions, flames, and so on.

The material of the protective component 32 can be iron, steel, copper, gold, aluminum, magnesium, etc.

The protective component 32 covers at least a portion of the pressure relief mechanism 25, so the protective component 32 overlaps at least a portion of the projection of the pressure relief mechanism 25 in a plane perpendicular to the first direction X. When the pressure inside the battery cell 20 is relieved through the pressure relief mechanism 25, the emissions discharged from the battery cell 20 via the pressure relief mechanism 25 are at least partially blocked by the protective component 32. This prevents the emissions having a high temperature from contacting with other structures inside the battery 100 or delays the time when the emissions with the high temperature contact with other structures inside the battery 100. This reduces the risk of high-temperature damage to other structures inside the battery 100 and reduces the risk of safety incidents such as fires or explosions caused by other structures inside the battery cell 20 due to high temperatures of the pressure relief mechanism 25 during pressure relief.

The thermal management component 31 and the battery cell 20 can either be in contact or connected. For example, the thermal management component 31 and the battery cell 20 can be connected through an adhesive component.

The protective component 32 is connected to the thermal management component 31. Therefore, the protective component 32 and the thermal management component 31 are integrated as one unit. The connection between the protective component 32 and the thermal management component 31 can be either fixed, such as welding. The connection between the protective component 32 and the thermal management component 31 can also be detachably connected, such as a snap-fit connection. In other embodiments, the thermal management component 31 and the protective component 32 can be integrally molded.

The protective component 32 is connected to the thermal management component 31 to be integrated into a functional component 30. Therefore, during the assembly process of the battery 100, the thermal management component 31 and the protective component 32 can be first assembled into a single structure and then mounted on the same side of the battery cell 20, thus simplifying the mounting process and reducing the difficulty of battery 100 assembly. In addition, the protective component 32 and the thermal management component 31 are provided on the same side of the battery cell 20, which is conducive to rationally utilizing the internal space of the box 10 of the battery 100.

In some embodiments, along the first direction X, a projection of the protective component 32 in a plane perpendicular to the first direction X covers an entirety of a projection of the pressure relief mechanism 25 in a plane perpendicular to the first direction X.

It can be understood that the protective component 32 completely covers the pressure relief mechanism 25, and the emissions discharged from the battery cell 20 through the pressure relief mechanism 25 can be fully acted on the protective component 32. The protective component 32 can prevent the emissions from further moving along the spray direction into other regions inside the battery 100 or altering the path of the emissions. Consequently, the time for the emissions to affect other structures inside the battery 100 is delayed, which is beneficial for cooling the emissions.

In the above technical solution, with the protective component 32 covering the entirety of the pressure relief mechanism 25, emissions from the pressure relief mechanism 25 can be blocked as much as possible by the protective component 32. This helps reduce the risk of high-temperature damage, caused by emissions discharged from the pressure relief mechanism 25, to other structures inside the battery 100. It reduces the risk of fires, explosions, and other safety incidents.

The projections of the thermal management component 31 and the protective component 32 on the surface perpendicular to the first direction X may or may not overlap.

Referring to FIGS. 5, 6, and 7, in some embodiments, the thermal management component 31 is provided with an avoidance hole 311, wherein the avoidance hole 311 is configured to avoid the pressure relief mechanism 25; and along the first direction X, the protective component 32 is connected to a side of the thermal management part back away from the battery cell 20 and covers at least a portion of the avoidance hole 311.

The shape of the avoidance hole 311 is not limited and can be circular, square, rectangular, or other irregular shapes. The shape of the avoidance hole 311 can also match the shape of the pressure relief mechanism 25. For example, if the shape of the pressure relief mechanism 25 is elliptical, then the shape of the avoidance hole 311 can also be elliptical. Along the first direction X, the projection of the pressure relief mechanism 25 on the thermal management component 31 is located inside the avoidance hole 311. Along the first direction X, the pressure relief mechanism 25 can extend into the avoidance hole 311 or can be located outside the avoidance hole 311.

The protective component 32 can be connected to the thermal management component 31 through methods such as welding or bonding. The protective component 32 is connected to the side of the thermal management component 31 back away from the battery cell 20, and the projections of the protective component 32 and the thermal management component 31 in the plane perpendicular to the first direction X can be overlapped at least partially.

The avoidance hole 311 of the thermal management component 31 avoids the pressure relief mechanism 25, which can help prevent the thermal management component 31 from interfering with the pressure relief mechanism 25 during the pressure relief. The protective component 32 is connected to the side of the thermal management component 31 back away from the battery cell 20 and covers at least a portion of the avoidance hole 311. This not only blocks emissions from the pressure relief mechanism 25 but also increases the distance between the pressure relief mechanism 25 and the protective component 32 by a thickness of the thermal management component 31 in the first direction X, which is advantageous for smooth opening of the pressure relief mechanism 25 during the pressure relief.

In some embodiments, a first flow channel 321 is formed inside the protective component 32, wherein the first flow channel 321 is configured to accommodate a fluid medium.

The first flow channel 321 can be an enclosed space. The first flow channel 321 can be also provided with spaces with openings 221 at both ends to allow the fluid medium to flow in an extending direction of the first flow channel 321.

The fluid medium accommodated within the first flow channel 321 is a gas, or can be a liquid; for example, the fluid medium can be air, water, and the like.

A first flow channel 321 is formed inside the protective component 32. If the first flow channel 321 accommodates a fluid medium, it can increase the specific heat capacity of the protective component 32, thereby better serving as insulation and fire prevention.

Referring to FIGS. 5, 6, and 7, In some embodiments, a second flow channel 312 configured to accommodate the fluid medium is formed inside the thermal management component 31, wherein the first flow channel 321 communicates with the second flow channel 312.

The first flow channel 321 and the second flow channel 312 are communicated to form a closed space. The fluid medium is confined within the space of the first flow channel 321 and the second flow channel 312. The first flow channel 321 and the second flow channel 312 can form a space arranged with an outlet and an inlet to allow the fluid medium to flow in an extending direction of the first flow channel 321 and the second flow channel 312.

The first flow channel 321 and the second flow channel 312 are communicated, where the fluid medium in the first flow channel 321 and second flow channel 312 can be enabled to flow through each other. This enhances heat transfer capability, thus allowing the thermal management component 31 to better regulate the temperature of the battery cell 20.

In some embodiments, after the first flow channel 321 and the second flow channel 312 are communicated, the fluid medium inside the first flow channel 321 can flow into the second flow channel 312, and the fluid medium inside the second flow channel 312 can also flow into the first flow channel 321.

In some embodiments, as shown in FIGS. 5, 6, and 7, the battery 100 further comprises a unidirectional conducting component 40, wherein the unidirectional conducting component 40 is configured to allow the fluid medium in the second flow channel 312 to flow into the first flow channel 321 and to prevent the fluid medium in the first flow channel 321 from flowing into the second flow channel 312.

In other words, the fluid medium inside the second flow channel 312 can flow into the first flow channel 321, and the fluid medium inside the first flow channel 321 can also flow into the second flow channel 312. The unidirectional conducting component 40 can be a one-way valve.

The unidirectional conducting component 40 allows the fluid medium to flow only from the second flow channel 312 to the first flow channel 321. When the protective component 32 is damaged due to the interaction with high-temperature gases emitted by the pressure relief mechanism 25, the fluid medium can flow from the second flow channel 312 to the first flow channel 321 and then from the damaged region to the pressure relief mechanism 25, thereby achieving cooling and extinguishing fires. This helps reduce the risk of safety incidents.

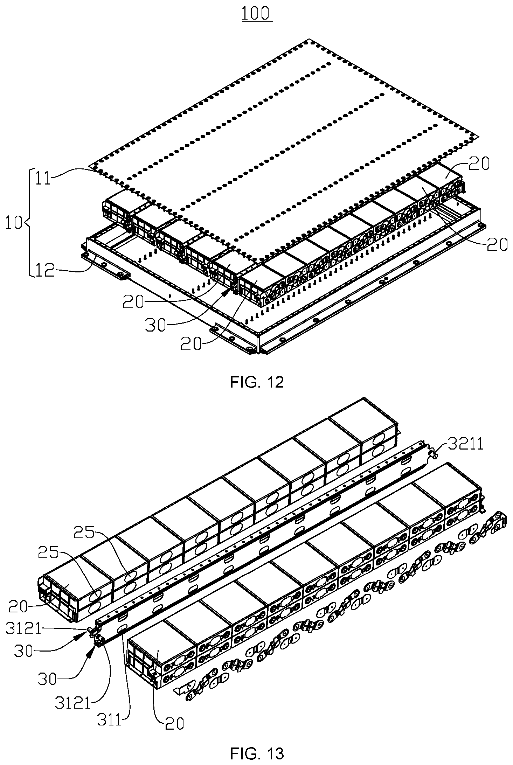

In some embodiments, the first flow channel 321 is provided with a medium outlet 3211 (shown in FIG. 13), and the second flow channel 312 is provided with a medium inlet 3121 (shown in FIG. 13).

The fluid medium can enter the first flow channel 321 from the medium inlet 3121 and flow toward the second flow channel 312, and can ultimately be discharged from the medium outlet 3211. The medium inlet 3121 can be connected to a feeding device that provides the fluid medium, and the medium outlet 3211 can be connected to a returning device that collects the fluid medium, wherein the returning device and the feeding device can be the same.

The first flow channel 321 and the second flow channel 312 are provided with a medium outlet 3211 and a medium inlet 3121, respectively, thus facilitating the circulation of the fluid medium inside the protective component 32 and the thermal management component 31. This is advantageous for temperature regulation of the battery cell 20 and helps maintain a larger specific heat capacity of the protective component 32.

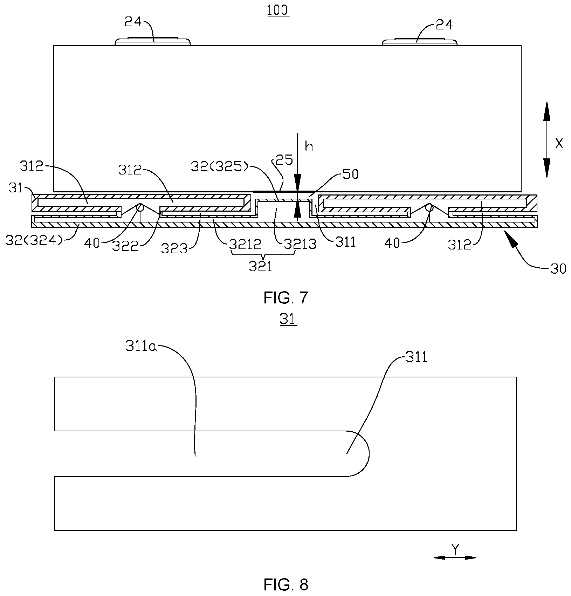

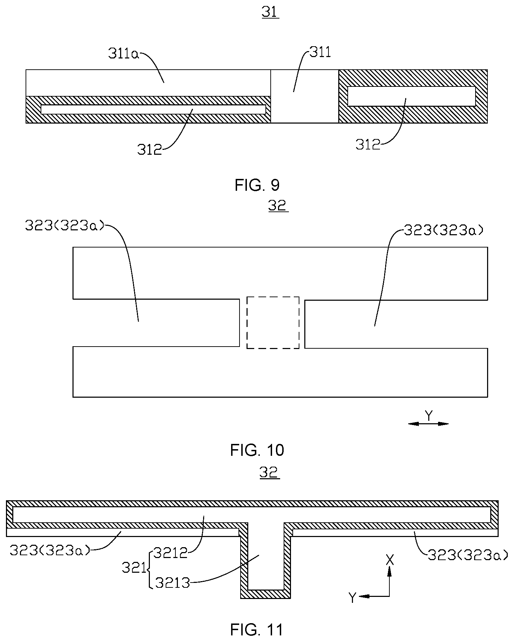

The emissions discharged from the pressure relief mechanism 25 need to be exhausted in a timely manner after being blocked in order to effectively reduce the risk of a safety incident in the battery cell 20. Thus, as shown in FIGS. 8 and 9, in some embodiments, along a second direction Y, the avoidance hole 311 penetrates at least one edge of the thermal management component 31, with the first direction X perpendicular to the second direction.

The avoidance hole 311 penetrates an edge of the thermal management component 31 in the second direction. In the second direction, the thermal management component forms a first discharge channel extending along the second direction. Emissions can be discharged along the direction in which the avoidance hole 311 penetrates the edge of the thermal management component 31. The second direction is any direction perpendicular to the first direction.

The avoidance hole 311 can penetrate one edge of the thermal management component 31 along the second direction Y, or it can penetrate multiple edges. In the embodiment of which the avoidance hole 311 penetrates multiple edges of the thermal management component 31 along the second direction Y, multiple first discharge channels can be formed in the circumferential direction of the pressure relief mechanism 25, which is conducive to improving the discharge efficiency.

As shown in FIG. 8, the first discharge channel 311a can penetrate through two opposing surfaces of the thermal management component 31 in a first direction. As shown in FIG. 9, the first discharge channel 311a can extend a surface of the thermal management component 31 in a first direction.

The avoidance hole 311 penetrates at least one edge of the thermal management component 31 in the second direction. Therefore, an emission channel is formed in the second direction, thus allowing emissions to be discharged along the second direction after the pressure relief mechanism 25 is opened. This improves emission efficiency and reduces the risk of secondary accidents caused by emissions from the pressure relief mechanism 25 being collected in the avoidance hole 311 due to obstruction by the protective component 32.

In the embodiment of which the protective component 32 is attached to the side of the thermal management component 31 back away from the battery cell 20, along the first direction X, the protective component 32 is provided with a first surface 322 facing the thermal management component 31 and connected to the thermal management component 31; the first surface 322 is provided with a groove 323, wherein the groove 323 penetrates at least one edge of the protective component 32 along the second direction; and the groove 323 is communicated with the avoidance hole 311, with the first direction X perpendicular to the second direction.

The groove 323 is in communication with the avoidance hole 311. The groove 323 penetrates at least one edge of the protective component 32 in the second direction. The protective component 32 is formed with a second discharge channel extending in the second direction. Therefore, in the second direction, the emissions can be discharged sequentially through the avoidance hole 311 and the groove 323.

As shown in FIG. 10, the second discharge channel 323a can penetrate both opposing surfaces of the protective component 32 along the first direction. That is, along the first direction X, the groove 323 extends to another surface opposite the first surface 322. The region defined by the dashed line in FIG. 10 can be the region covering the avoidance hole 311 in the first direction and opposite the pressure relief mechanism 25. As shown in FIG. 11, the second discharge channel 323a can extend one surface of the protective component 32 along the first direction X. That is, along the first direction X, there is a distance between the bottom surface of the groove 323 and another surface of the protective component 32 opposite to the first surface 322 in the first direction X.

The groove 323 can penetrate one edge of the protective component 32 in the second direction, or it can penetrate multiple edges. The embodiment of which the groove 323 penetrates multiple edges of the protective component 32 along the second direction, the groove 323 forms multiple second discharge channels 323a extending in a second direction and communicating with the avoidance hole 311, and the emissions can be discharged from the multiple second discharge channels 323a synchronously. It is beneficial to improve the discharge efficiency.

The groove 323 penetrates at least one edge of the protective component 32 along the second direction, and the groove 323 and the avoidance hole 311 are communicated. After the pressure relief mechanism 25 is opened, gases can be quickly discharged along the second direction within the groove 323. This improves the efficiency of gas discharge and reduces the risk of secondary accidents caused by gases from the pressure relief mechanism 25 accumulating in the avoidance holes 311.

Referring to FIGS. 6, 7, and 11, in some embodiments, the protective component 32 comprises a main body part 324 and an extending portion 325 connected with each other; the main body part 324 is connected to a side of the thermal management component 31 back away from the battery cell 20; and the extension portion 325 extends from the main body part 324 to inside of the avoidance hole 311.

The main body part 324 and the thermal management component 31 are arranged in a stacked arrangement in the first direction X. The edge of the main body part 324 can extend beyond the edge of the thermal management component 31, or the edge of the thermal management component 31 extend beyond the edge of the main body part 324 (shown in FIGS. 5 and 6), or the edge of the main body part 324 and the edge of the thermal management component 31 are flush (shown in FIG. 7).

As shown in FIGS. 6, 7, and 11, in the embodiment of which the first flow channel 321 is formed inside the protective component 32, a channel portion 3212 is formed inside the main body part 324. An accommodation portion 3213 is formed inside the extending portion 325. The channel portion 3212 and the accommodation portion 3213 are communicated at the connecting position of the main body part 324 and the extending portion 325. The channel portion 3212 and the accommodation portion 3213 together form the first flow channel 321. The cross-sectional area of the first flow channel 321 at the location where the channel portion 3212 and the accommodation portion 3213 overlap is greater than at other locations. The flow rate of the first flow channel 321 at the location where the channel portion 3212 and the accommodation portion 3213 overlap is greater than at other locations of the first flow channel 321. Therefore, the more fluid medium can be accommodated. The position of the first flow channel 321 where the channel portion 3212 and the containment portion 3213 overlap is directly opposite the pressure relief mechanism 25, which enables a greater specific heat capacity at the location of the extending portion 325, thus increasing the protective capacity of the protective component 32.

In addition, the extending portion 325 extends into the avoidance hole 311, which can form a positional fit with the avoidance hole 311 so as to improve the relative stability between the thermal management component 31 and the protective component 32.

In other embodiments, as shown in FIG. 5, the protective component 32 can also include only the main body part 324 and cannot include the extending portion 325. This makes the position of the protective component 32 covering the pressure relief mechanism 25 and the gap 50 of the pressure relief mechanism 25 in the first direction X larger, which facilitates the smooth opening of the pressure relief mechanism 25. This allows the battery cell 20 to be relieved of pressure in a timely manner.

In some embodiments, along the first direction X, a gap 50 is arranged between the pressure relief mechanism 25 and the protective component 32.

In the embodiment of which the protective component 32 includes the main body part 324 and the extending portion 325, the formation of a gap 50 between the pressure relief mechanism 25 and the protective component 32 refers to the space between the side of the extending portion 325 back away the main body part 324 and the pressure relief mechanism 25.

In the embodiment of which the protective component 32 includes only the main body part 324, the formation of a gap 50 between the pressure relief mechanism 25 and the protective component 32 refers to the space between the surface of the main body part 324 facing the pressure relief mechanism 25 and the pressure relief mechanism 25.

When the pressure inside the battery cell 20 reaches a threshold value, the pressure relief mechanism 25 will be actuated or activated to a certain state, thereby allowing the release of internal pressure and temperature within the battery cell 20. The actions produced by the pressure relief mechanism 25 can comprise but are not limited to at least a portion of the pressure relief mechanism 25 breaking, shattering, tearing, opening, and so on. A certain amount of space around the pressure relief mechanism 25 is required to accommodate the generation of the action of the pressure relief mechanism 25.

Therefore, a gap 50 is formed between the pressure relief mechanism 25 and the protective component 32 in the first direction X, which facilitates the smooth opening of the pressure relief mechanism 25 to release the pressure inside the battery cell 20 so as to help reduce the risk of safety incidents such as explosions or fires in the battery 100.

Of course, in other embodiments, the pressure relief mechanism 25 can have different structural forms and pressure relief methods. If the protective component 32 is against the pressure relief mechanism 25 in the first direction X, the pressure relief mechanism 25 can also realize pressure relief, which is also feasible in the embodiments of the present disclosure.

As shown in FIGS. 5, 6, and 7, in some embodiments, along the first direction, a dimension of the gap 50 is h, which satisfies 0.2mm $\leq$ h $\leq$ 5mm.

The h can be 0.3 mm, 0.4 mm, 0.8 mm, 1 mm, 1.5 mm, 2 mm, 2.5 mm, 3 mm, 3.5 mm, 4 mm, 4.5 mm, etc.

If the gap 50 in the first direction X is too large, it can result in a less compact structure between the functional component 30 and the battery cell 20, which occupies more space. On the other hand, if the gap 50 in the first direction X is too small, it can result in the pressure relief mechanism 25 not being able to open for pressure relief. Therefore, 0.2mm $\leq$ h $\leq$ 5mm ensures a more compact overall structure formed by the functional component 30 and the battery cell 20, and also allows the pressure relief mechanism 25 to open smoothly for pressure relief.

In some embodiments, an area of the pressure relief mechanism 25 is S; and along the first direction, a dimension of the gap is h, satisfying h $\geq$

$$0.2*\sqrt{3.14*S}$$

.

The area of the pressure relief mechanism 25 is S in mm$^2$.

The area of the pressure relief mechanism 25 can be the area of the projection of the pressure relief mechanism 25 in a plane perpendicular to the first direction X. In the case where the projection of the pressure relief mechanism 25 in the plane of the first direction X is a heterogeneous shape, after equating the shape of the pressure relief mechanism 25 to a circle, its area can be obtained.

The larger the pressure relief area of the pressure relief mechanism, the more space is needed to open and achieve pressure relief. Therefore, satisfying

$$h \geq 0.2*\sqrt{3.14*S}$$ is advantageous for the pressure relief mechanism to open to a certain area to achieve pressure relief.

Further, $$h \geq 0.5* \sqrt{3.14*S}$$ is advantageous for the pressure relief mechanism 25 to open to a larger area, thereby achieving rapid pressure relief.

The thermal management component 31 can be in contact with or connected to the battery cell 20, thereby achieving the attachment of the thermal management component 31 to the battery cell 20. In the embodiment of which the thermal management component 31 is connected to the battery cell 20, various methods such as adhesive bonding, welding, or snap-fit connection can be used between the thermal management component 31 and the battery cell 20. In some embodiments, the battery 100 further comprises an adhesive layer 60, wherein the thermal management component 31 is connected to the battery cell 20 through the adhesive layer 60.

The adhesive layer 60 can be formed by the liquid adhesive coated between the battery cell 20 and the thermal management component 31, which solidifies after curing. Alternatively, it can be the adhesive tape adhered between the thermal management component 31 and the battery cell 20.

Connecting the thermal management component 31 to the battery cell 20 via the adhesive layer 60 ensures good stability of the connection, thereby maintaining a stable relative positional relationship between the functional component 30 and the battery cell 20. Additionally, this connection method is simple, thereby reducing the assembly difficulty of the battery cell 20.

In some embodiments, as shown in FIGS. 5 and 6, the protective component 32 is attached to the side of the thermal management component 31 back away from the battery cell 20 along the first direction X. The thickness of the adhesive layer 60 is m, satisfying 0.2 $\leq$ m $\leq$ 5

mm.

The thickness of the adhesive layer 60 is the distance, along the first direction X, between the surface of the adhesive layer 60 facing the battery cell 20 and the surface of the adhesive layer 60 facing the thermal management component 31.

The m can be 0.2 mm, 0.3 mm, 0.4 mm, 0.8 mm, 1 mm, 1.5 mm, 2 mm, 2.5 mm, 3 mm, 3.5 mm, 4 mm, 4.5 mm, etc.

If the thickness of the adhesive layer 60 is too small, the adhesive strength is not enough. If the thickness of the adhesive layer 60 is too large, the space occupied by the adhesive layer 60 is large. Therefore, the thickness m of the adhesive layer 60 satisfies $0.2 \text{ mm} \leq m \leq 5 \text{ mm}$, which ensures that the adhesive layer 60 has sufficient adhesive strength, and also makes the thickness of the adhesive layer 60 reasonable, thus avoiding that the volume of the adhesive layer 60 is too large to affect the energy density of the battery 100.

In some embodiments, a melting point of a material of the protective component 32 is A, satisfying $A \leq 1600°C$.

The melting point is the temperature at which a solid transforms (melts) its state of matter from a solid to a liquid, i.e., the temperature at which the protective component 32 transforms from a solid to a molten state.

A can be 1500°C, 1400°C, 1300°C, 1200°C, 1100°C, 1000°C, 900°C, 700°C, 600°C, 500°C, 400°C, etc. The material of the protective component 32 can be iron (melting point 1535°C), steel (melting point 1515°C), copper (melting point 1083°C), gold (melting point 1064°C), etc.

If the melting point of the material of the protective component 32 is too high and in the case where a first flow channel 321 is formed inside the protective component 32 with fluid medium accommodated in the first flow channel 321, the protective component 32 is less likely to melt. Consequently, during the pressure relief process of the pressure relief mechanism 25, the fluid medium inside the protective component 32 sprays out towards the pressure relief mechanism 25, thus aiding in cooling and extinguishing fires. $A \leq 1300°C$ can block high temperature gases and other emissions from the pressure relief mechanism 25; moreover, it can be melted in a timely manner if the temperature of the hot gases and other emissions discharged from the pressure relief mechanism 25 is too high, thus allowing the internal fluid medium to spray out for cooling and fire extinguishing. This helps reduce the risk of serious safety incidents such as explosions and fires.

In some embodiments, $A \leq 800°C$.

A can be 750°C, 650°C, 550°C, 450°C, 350°C, 250°C, 200°C, 100°C, etc. The material of the protective component 32 can be aluminum (melting point 660°C), magnesium (melting point 648.8°C), etc.

If A > 800°C, the temperature inside the battery 100 needs to be greater than 800°C for the protective component 32 to melt. This can result in damage to other components of the battery 100 with lower temperature resistance. Therefore, $A \leq 800°C$ can block high-temperature gases and other emissions from the pressure relief mechanism 25. In addition, it can be melted in a timely manner if the temperature of the emissions discharged from the pressure relief mechanism 25 is too high, thus allowing the internal fluid medium to spray out for cooling and fire extinguishing. This helps reduce the risk of serious safety incidents such as explosions and fires and also decreases the risk of other components within the battery 100 being damaged by high temperatures.

In some embodiments, a volume of the protective component 32 is $V_1$ with a unit of dm³; and a capacity of the battery 100 is C with a unit of Ah, satisfying $1 \leq V_1/C$.

$V_1/C$ can be 1.5, 2, 2.5, 3, 3.5, 4, etc.

The larger the capacity of the battery 100, the greater the amount and temperature of emissions discharged when the internal pressure of the battery cell 20 of the battery 100 reaches the point where the pressure relief mechanism 25 opens to relieve the pressure. This requires a higher blocking capability for the protective component 32 to block the emissions effectively. Therefore, $1 \leq V_1/C$ ensures that the blocking capability of the protective component 32 to block emissions matches the capacity of the battery, thereby enabling the protective component 32 to better serve as insulation and fire prevention, i.e., better firefighting.

In some embodiments, $V_1/C \leq 10$.

$V_1/C$ can be 9.5, 9, 8.5, 7, 7.5, 6, 5.5, 5, 4.5, etc.

If $V_1/C$ is too large, the blocking capability of the protective component 32 to block emissions far exceeds the corresponding blocking capability required for the capacity of the battery 100. This not only leads to performance waste but also results in the protective component 32 being oversized, which occupies more space. Therefore, $V_1/C \leq 10$ ensures that the blocking capability of the protective component 32 is slightly higher than the corresponding blocking capability required for the capacity of the battery 100, thereby reducing performance waste, preventing the protective component 32 from being oversized, and reducing the space occupied by the protective component 32.

In some embodiments, a volume of the thermal management component 31 is $V_2$, satisfying $V_1/V_2 \leq 0.5$.

$V_1/V_2$ can be 0.1, 0.15, 0.2, 0.25, 0.3, 0.35, 0.4, 0.45, etc.

The temperature regulation capability of the thermal management component 31 is generally matched with the capacity of the battery 100. The larger the capacity of the battery 100, the higher the temperature regulation capability of the thermal management component 31 is required. In the case of $1 \leq V_1/C$, if the size of the thermal management component 31 is too large, its temperature regulation capability exceeds the temperature regulation capability that the battery 100 should theoretically need, resulting in wasted performance. In addition, the size of the thermal management component 31 is too large and will take up more space. Therefore, $V_1/V_2 \leq 0.5$ ensures that the temperature regulation capability of the thermal management component 31 matches the capacity of the battery 100, thus reducing performance waste, preventing the thermal management component 31 from being oversized, and reducing the space occupied by the thermal management component 31.

In some embodiments, $V_1/V_2 \leq 0.2$.

$V_1/V_2$ can be 0.02, 0.05, 0.07, 0.09, 0.11, 0.13, 0.17, 0.19, etc.

If $V_1/V_2$ is greater than 0.2, there is still considerable performance waste in the thermal management component 31 for a certain capacity of the battery 100. Therefore, $V_1/V_2 \leq 0.2$ can help reduce performance waste, prevent the thermal management component 31 from being oversized, and reduce the space occupied by the thermal management component 31.

As shown in FIGS. 12 and 13, in some embodiments, the battery 100 comprises multiple battery cells 20; each battery cell 20 is provided with at least one pressure relief mechanism 25; the thermal management component 31 is provided with multiple avoidance holes 311; and the avoidance holes 311 correspond one-to-one with the pressure relief mechanisms 25 of the battery cells 20.

The thermal management component 31 can simultaneously regulate the temperature of multiple battery cells 20. The thermal management component 31 is provided with multiple avoidance holes 311 to allow the thermal management component 31 to avoid the pressure relief mechanisms 25 of each battery cell 20 to which it is attached, thus preventing interference with the pressure relief of the battery cells 20.

Arranging the avoidance holes 311 to correspond one-to-one with the pressure relief mechanisms 25 of the battery cells 20 facilitates the release of the pressure inside the battery cell 20 from each pressure relief mechanism 25, thereby enhancing the safety performance of the battery 100.

In other embodiments, the thermal management component 31 can also be provided with one avoidance hole 311, wherein the avoidance hole 311 avoids the pressure relief mechanisms 25 of multiple battery cells 20. This simplifies the structure of the thermal management component 31.

In some embodiments, the battery 100 comprises multiple protective components 32; and each protective component 32 covers one avoidance hole 311.

The protective component 32 and the avoidance hole 311 are provided in one-to-one correspondence. Each protective component 32 covers its corresponding avoidance hole 311 to block the emissions discharged by the corresponding pressure relief mechanism 25.

Each protective component 32 covers the corresponding avoidance hole 311, thus facilitating the replacement of the protective component 32. During the replacement process, only the damaged part of the protective component 32 needs to be replaced, which avoids the need to replace the entire protective component 32. This reduces waste and saves costs.

In other embodiments, one protective component 32 covers multiple avoidance holes 311, which means that one protective component 32 can block the emissions discharged by multiple pressure relief mechanisms 25. This reduces the number of the protective components 32 of the battery 100, and also decreases the number of components that need to be assembled, thereby reducing assembly complexity and improving assembly efficiency.

In the embodiment of which the battery 100 includes multiple battery cells 20, at least some of the multiple battery cells 20 are arranged stacked along the first direction X. Along the first direction X, the pressure relief mechanisms 25 of two adjacent battery cells 20 can be arranged opposite to each other. Thus, along the first direction X, two functional components 30 can be arranged between the two adjacent battery cells 20. To enhance the structural stability of the battery 100, a support structure 70 is arranged between the two functional components 30 of the two adjacent battery cells 20 along the first direction X. Along the first direction X, one functional component 30 is arranged between the support structure 70 and one battery cell 20, and the other functional component 30 is arranged between the support structure 70 and another battery cell 20.

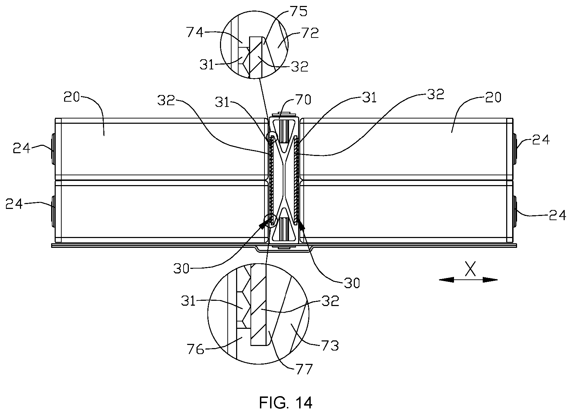

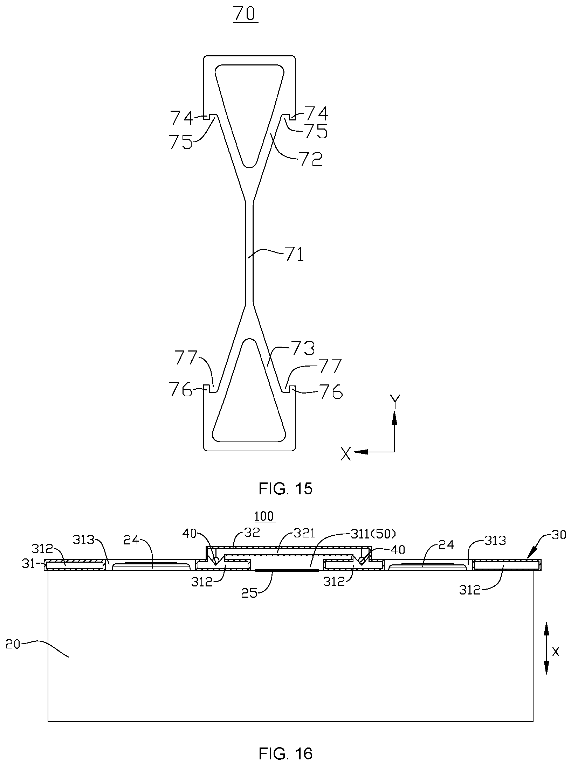

As shown in FIGS. 14 and 15, the support structure 70 is a hollow structure. The support structure 70 includes a connecting part 71, a first hollow portion 72, and a second hollow portion 73. Along the second direction Y, the first hollow portion 72 and the second hollow portion 73 are connected to each end of the connecting part 71. The first hollow portion 72 and the second hollow portion 73 are both triangular in cross-section, and a triangular cavity is formed inside both the first hollow portion 72 and the second hollow portion 73 to enable reducing the weight of the support structure 70. Two surfaces of the first hollow portion 72 along the first direction X are connected to the first limiting portion 74, respectively. The first limiting portion 74 protrudes from the surface of the first hollow portion 72 along a direction where the second direction Y towards the second hollow portion 73, and defines the first space 75 between the first limiting portion 74 and the surface of the first hollow portion 72 along the first direction X. Two surfaces of the second hollow portion 73 along the first direction X are connected to the second limiting portion 76, respectively. The second limiting portion 76 protrudes from the surface of the second hollow portion 73 along a direction where the second direction Y towards the first hollow portion 72, and defines the second space 77 between the second limiting portion 76 and the surface of the second hollow portion 73 along the first direction X. Both ends of the thermal management component 31 along the second direction are respectively abutted against one end of the first limiting portion 74 facing the second hollow portion 73 and one end of the second limiting portion 76 facing the first hollow portion 72, thus limiting the thermal management component 31. Both ends of the protective component 32, along the second direction Y, **are respectively** clamped within the first space 75 and the second space 77, thus limiting the protective component 32. This enables the limitation of the functional component 30 and improves the stability of the mounting of the functional component 30.

Since the second direction Y can be any direction perpendicular to the first direction X, in the present disclosure, the extending direction of the first discharge channel 311a, the extending direction of the second discharge channel 323a, and the arrangement direction of the first hollow portion 72 and the second hollow portion 73 can be the same direction or different directions.

In some embodiments, as shown in FIGS. 5 to 7, the battery cell 20 is further provided with an electrode terminal 24 configured for outputting electrical energy of the battery cell 20, and the functional component 30 is arranged on a side of the battery cell 20 back away from the electrode terminal 24.

In the embodiment, the pressure relief mechanism 25 is arranged on the side of the battery cell 20 back away from the electrode terminal 24. For example, when the electrode terminal 24 is arranged on the end cap 21, the pressure relief mechanism 25 can be arranged on the bottom wall of the shell 22.

A circuit board can be arranged inside the battery 100, wherein the circuit board can be provided with pressure sensors, temperature sensors, and other components to monitor relevant information within the battery 100 so as to determine whether the battery 100 is normal or not, thus effectively reducing the risk of safety accidents. To facilitate setup and ensure accurate information detection, the circuit board is typically arranged close to the electrode terminal 24. In the embodiment of which the battery 100 comprises multiple battery cells 20, the multiple battery cells 20 can be connected in series, parallel, or hybrid through a busbar component. The busbar component is connected to the electrode terminal 24. Both the circuit board and the busbar component require space on the side of the electrode terminal 24. Other internal structures of the battery 100 can include, but are not limited to, the circuit board and the busbar component.

Therefore, arranging the functional component 30 on the side of the battery cell 20 back away from the electrode terminal 24 facilitates the connection of the electrode terminal 24 with other structures inside the battery 100 to output electrical energy from the battery cell 20. It also reduces the risk of interference between the functional components 30 and other structures inside the battery 100.

In some embodiments, as shown in FIG. 16, the battery cell 20 is further provided with an electrode terminal 24 configured for outputting the electrical energy of the battery cell 20. The functional component 30 and the electrode terminal 24 are arranged on the same side of the battery cell 20. The thermal management component 31 is arranged to avoid the electrode terminal 24.

**In** the embodiment, the pressure relief mechanism 25 and the electrode terminal 24 are arranged on the same side of the battery cell 20. For example, when the electrode terminal 24 is arranged on the end cap 21, the pressure relief mechanism 25 can be arranged on the end cap 21.

The thermal management component 31 is arranged with a through-hole 313 to avoid the electrode terminal 24. The through-hole 313 and the electrode terminal 24 are provided in one-to-one correspondence.

The functional component 30 and electrode terminal 24 are located on the same side of the battery cell 20, and the thermal management component 31 is arranged to avoid the electrode terminal 24. Therefore, the functional component 30 can utilize the space of the electrode terminal 24 protruding from the end cap 21 to improve the space utilization inside the battery 100, which is beneficial for enhancing the energy density of the battery 100.

The embodiments of the present disclosure further provide an electrical device, comprising the battery 100 provided in any one of the above embodiments.

The embodiments of the present disclosure provide a battery 100, and the battery 100 comprises a battery cell 20 and a functional component 30. A side of the battery cell 20 along a first direction X is provided with a pressure relief mechanism 25. The functional component 30 is located on one side of the battery cell 20 where the pressure relief mechanism 25 is provided, and the functional component 30 comprises a thermal management component 31 and a protective component 32. The thermal management component 31 is adhered to one side of the battery cell 20 back away from the electrode terminal 24. The protective component 32 is connected to one side of the thermal management component 31 back away from the battery cell 20, and covers the entire pressure relief mechanism 25. A first flow channel 321 is formed inside the protective component 32. A second flow channel 312 is formed inside the thermal management component 31. The first flow channel 321 communicates with the second flow channel 312.

The battery 100 further comprises a unidirectional conducting component 40, wherein the unidirectional conducting component 40 allows the fluid medium in the second flow channel 312 to flow into the first flow channel 321 and prevents the fluid medium in the first flow channel 321 from flowing into the second flow channel 312.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

## Claims

1. A battery, comprising

   a battery cell, wherein one side along a first direction is provided with a pressure relief mechanism; and
   a functional component, located on one side of the battery cell where the pressure relief mechanism is provided, and the functional component comprises:

   a thermal management component, attached to the battery cell, wherein the thermal management component is configured to regulate a temperature of the battery cell; and
   a protective component, connected to the thermal management component and covering at least a portion of the pressure relief mechanism.

2. The battery according to claim 1, wherein along the first direction, a projection of the protective component in a plane perpendicular to the first direction covers an entirety of a projection of the pressure relief mechanism in a plane perpendicular to the first direction.

3. The battery according to claim 1 or 2, wherein the thermal management component is provided with an avoidance hole, wherein the avoidance hole is configured to avoid the pressure relief mechanism; and along the first direction, the protective component is connected to a side of the thermal management component back away from the battery cell and covers at least a portion of the avoidance hole.

4. The battery according to any one of claims 1 to 3, wherein a first flow channel is formed inside the protective component, wherein the first flow channel is configured to accommodate a fluid medium.

5. The battery according to claim 4, wherein a second flow channel configured to accommodate the fluid medium is formed inside the thermal management component, wherein the first flow channel communicates with the second flow channel.

6. The battery according to claim 5, wherein the battery further comprises a unidirectional conducting component, wherein the unidirectional conducting component is configured to allow the fluid medium in the second flow channel to flow into the first flow channel and to prevent the fluid medium in the first flow channel from flowing into the second flow channel.

7. The battery according to claim 6, wherein the first flow channel is provided with a medium outlet, and the second flow channel is provided with a medium inlet.

8. The battery according to claim 3, wherein along a second direction, the avoidance hole penetrates at least one edge of the thermal management component, with the first direction perpendicular to the second direction.

9. The battery according to claim 3 or 8, wherein along the first direction, the protective component is provided with a first surface facing the thermal management component and connected to the thermal management component; the first surface is provided with a groove, wherein the groove penetrates at least one edge of the protective component along a second direction; and the groove is communicated with the avoidance hole, with the first direction perpendicular to the second direction.

10. The battery according to claim 3, 8, or 9, wherein the protective component comprises a main body part and an extending portion connected with each other; the main body part is connected to a side of the thermal management component back away from the battery cell; and the extension portion extends from the main body part to inside of the avoidance hole.

11. The battery according to any one of claims 1 to 10, wherein along the first direction, a gap is arranged between the pressure relief mechanism and the protective component.

12. The battery according to claim 11, wherein along the first direction, the gap has a dimension h satisfying 0.2 mm $\leq$ h $\leq$ 5 mm.

13. The battery according to claim 11 or 12, wherein an area of the pressure relief mechanism is S; and along the first direction, a dimension of the gap is h, satisfying $h \geq 0.2 * \sqrt{3.14 * S}$ .

14. The battery according to claim 13, wherein $h \geq 0.5 * \sqrt{3.14 * S}$ .

15. The battery according to any one of claims 1 to 14, wherein the battery further comprises an adhesive layer, wherein the thermal management component is connected to the battery cell through the adhesive layer.

**16.** The battery according to any one of claims 1 to 15, wherein a melting point of a material of the protective component is A, satisfying $A \leq 1600°C$.

**17.** The battery according to claim 16, wherein $A \leq 800°C$.

**18.** The battery according to any one of claims 1 to 17, wherein a volume of the protective component is $V_1$ with a unit of $dm^3$; and a capacity of the battery is C with a unit of Ah, satisfying $1 \leq V_1/C$.

**19.** The battery according to claim 18, wherein $V_1/C \leq 10$.

**20.** The battery according to claim 18 or 19, wherein a volume of the thermal management component is $V_2$, satisfying $V_1/V_2 \leq 0.5$.

**21.** The battery according to claim 20, wherein $V_1/V_2 \leq 0.2$.

**22.** The battery according to claim 3, wherein the battery comprises multiple battery cells; each battery cell is provided with at least one pressure relief mechanism; the thermal management component is provided with multiple avoidance holes; and the avoidance holes correspond one-to-one with the pressure relief mechanisms of the battery cells.

**23.** The battery according to claim 22, wherein the battery comprises multiple protective components; and each protective component covers one avoidance hole.

**24.** The battery according to claim 22, wherein one protective component covers multiple avoidance holes.

**25.** The battery according to any one of claims 1 to 24, wherein the battery cell is further provided with an electrode terminal configured for outputting electrical energy of the battery cell, and the functional component is arranged on a side of the battery cell back away from the electrode terminal.

**26.** The battery according to any one of claims 1 to 24, wherein the battery cell is further provided with an electrode terminal configured for outputting electrical energy of the battery cell; the functional component and the electrode terminal are arranged on a same side of the battery cell; and the thermal management component is arranged to avoid the electrode terminal.

**27.** An electrical device, comprising the battery according to any one of claims 1 to 26.

100'

32'     24'                    25'                         24'

20'

31'

FIG. 1

1000

200

300     100

FIG. 2

100

FIG. 3

20

FIG. 4

FIG. 5

FIG. 6

FIG. 7

FIG. 8

31

311a    311

312    312

FIG. 9

32

323(323a)    323(323a)

Y

FIG. 10

32

323(323a)    323(323a)

321 { 3212
       3213

X

Y

FIG. 11

FIG. 12

FIG. 13

FIG. 14

<u>70</u>

FIG. 15

<u>100</u>

FIG. 16

## INTERNATIONAL SEARCH REPORT

| International application No. |
| --- |
| **PCT/CN2022/123365** |

| A. | CLASSIFICATION OF SUBJECT MATTER |
| --- | --- |
| | H01M50/333(2021.01)i;H01M10/613(2014.01)i |

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

EN, CNABS, CNTXT, WOTXT, EPTXT, USTXT, CNKI, IEEE: 电池, 泄压, 排气, 热管理, 冷却, 防护, 保护, 覆盖, cell, battery, degas, relief, release, thermal, cool, protect, secure. coat

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 213601965 U (NINGDE CONTEMPORARY AMPEREX TECHNOLOGY CO., LTD.) 02 July 2021 (2021-07-02) description, paragraphs 5-166, and figures 1-18 | 1-27 |
| X | WO 2022006895 A1 (NINGDE CONTEMPORARY AMPEREX TECHNOLOGY CO., LTD.) 13 January 2022 (2022-01-13) description, page 6, paragraph 2-page 21, paragraph 3, and figures 1-16 | 1-27 |
| X | CN 213026309 U (NINGDE CONTEMPORARY AMPEREX TECHNOLOGY CO., LTD.) 20 April 2021 (2021-04-20) description, paragraphs 5-202, and figures 1-19 | 1-27 |
| X | CN 213584016 U (NINGDE CONTEMPORARY AMPEREX TECHNOLOGY CO., LTD.) 29 June 2021 (2021-06-29) description, paragraphs 5-156, and figures 1-15 | 1-27 |
| X | CN 213636145 U (NINGDE CONTEMPORARY AMPEREX TECHNOLOGY CO., LTD.) 06 July 2021 (2021-07-06) description, paragraphs 6-113, and figures 1-11 | 1-27 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2023** | **19 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/123365**

**C.    DOCUMENTS CONSIDERED TO BE RELEVANT**

| Category* | Citation of document, with indication, where appropriate, of the relevant passages | Relevant to claim No. |
|---|---|---|
| A | CN 216720195 U (NINGDE CONTEMPORARY AMPEREX TECHNOLOGY CO., LTD.) 10 June 2022 (2022-06-10) entire document | 1-27 |

## INTERNATIONAL SEARCH REPORT
### Information on patent family members

International application No.

**PCT/CN2022/123365**

| Patent document cited in search report | | | Publication date (day/month/year) | Patent family member(s) | | | Publication date (day/month/year) |
|---|---|---|---|---|---|---|---|
| CN | 213601965 | U | 02 July 2021 | None | | | |
| WO | 2022006895 | A1 | 13 January 2022 | JP | 2023505969 | A | 14 February 2023 |
| | | | | EP | 3965213 | A1 | 09 March 2022 |
| | | | | EP | 3965213 | A4 | 29 March 2023 |
| | | | | US | 2022013849 | A1 | 13 January 2022 |
| | | | | KR | 20220095224 | A | 06 July 2022 |
| CN | 213026309 | U | 20 April 2021 | None | | | |
| CN | 213584016 | U | 29 June 2021 | None | | | |
| CN | 213636145 | U | 06 July 2021 | None | | | |
| CN | 216720195 | U | 10 June 2022 | None | | | |

Form PCT/ISA/210 (patent family annex) (July 2022)